# FASCICULE DE BREVET EUROPEEN

(11) **EP 4 019 877 B1**
(45) Date de publication et mention de la délivrance du brevet: **07.06.2023**
(21) Numéro de dépôt: 21216731.6
(22) Date de dépôt: 22.12.2021
(51) Int. Cl.: F28D 20/00

(54) **SYSTÈME DE STOCKAGE THERMIQUE (SST) PAR MATÉRIAUX À CHANGEMENT DE PHASE (MCP) COMPRENANT UN DISPOSITIF DE BULLAGE ET D'ENSEMENCEMENT**
THERMISCHES SPEICHERSYSTEM (TSS) ANHAND VON PHASENWECHSELMATERIAL (PCM), DAS EINE BLASENBILDUNGS- UND IMPFVORRICHTUNG UMFASST
THERMAL STORAGE SYSTEM (TSS) BY PHASE CHANGE MATERIALS (PCM) COMPRISING A DEVICE FOR BUBBLING AND SEEDING

(30) Priorité: 22.12.2020 FR 2013968
(43) Date de publication de la demande: 29.06.2022
(73) Titulaire: Commissariat à l'Energie Atomique et aux Energies Alternatives, 75015 Paris (FR); Université Claude Bernard Lyon 1, 69100 Villeurbanne (FR); Centre National de la Recherche Scientifique, 75016 Paris (FR)
(72) Inventeur: PIQUARD, Louis, 38054 GRENOBLE Cedex 09 (FR); BENTIVOGLIO, Fabrice, 38054 GRENOBLE Cedex 09 (FR); GAGNIERE, Emilie, 69140 RILLIEUX-LA-PAPE (FR); LARGILLER, Grégory, 38054 GRENOBLE Cedex 09 (FR); MANGIN, Denis, 69140 RILLIEUX-LA-PAPE (FR)
(74) Mandataire: Hautier IP

(56) Documents cités:
- EP-A1- 3 489 608
- EP-A1- 3 594 601
- WO-A1-89/08228
- DE-A1- 2 907 366

## Description

La présente invention concerne les Systèmes de Stockage Thermique (SST) par Matériaux à Changement de Phase (MCP), et plus particulièrement, comprenant un dispositif de contrôle de la cristallisation du MCP.

La présente invention concerne plus particulièrement un SST par MCP conforme au préambule de la revendication 1, tel qu'illustré dans le document EP 3 489 608.

Tous les SST utilisant un MCP présentant des problématiques de surfusion et de vitesse de cristallisation lente sont susceptibles d'être concernés par l'invention, et plus particulièrement les MCP cumulant de faibles taux de nucléation primaire et de faibles taux de croissance cristalline.

La présente invention trouvera son application dans les réseaux de chaleur et/ou de froid, urbains, ruraux ou industriels ainsi que dans le stockage de l'énergie solaire. L'invention pourra également trouver des applications dans l'habitat, le transport thermique hors réseaux (camions, bateaux...) et le management thermique de systèmes embarqués.

### ETAT DE LA TECHNIQUE

Le stockage de chaleur exploitant la chaleur latente de matériaux à changement de phase (MCP), offre l'avantage d'une densité énergétique de stockage élevée (pouvant dépasser 100 kWh/m³) et la possibilité de stocker de la chaleur à haute température en limitant les considérations de tenue à la pression du système (contrairement par exemple aux systèmes de stockage de chaleur en eau pressurisée surchauffée).

Pour des températures inférieures à 100°C, qui correspondent à des applications sur réseau de chaleur notamment, les MCP considérés sont généralement des paraffines, des sels fondus, des sels hydratés ou des eutectiques, qui présentent souvent comme désavantages soit une faible enthalpie de changement d'état (≤170 kJ/kg), soit une toxicité/nocivité pour l'homme ou pour l'environnement, soit une forte corrosivité, soit des propensions à la ségrégation ou à la non-congruence. Ces inconvénients rendent en l'état leur développement à grande échelle difficilement envisageable et présentent un premier frein au déploiement et à l'exploitation de ces stockages sur des réseaux de chaleur urbains ou industriels.

En réponse à cette problématique, une solution est d'utiliser des polyols, ou sucres alcooliques, et leurs produits dérivés, comme MCP. Outre une bonne, voire très bonne enthalpie de changement d'état (de 200 à 340 kJ/kg, contribuant à la densité énergétique de stockage), ces MCP présentent également de nombreux avantages puisqu'ils sont biosourcés, alimentaires donc non toxiques, non corrosifs, accessibles et bio dégradables. Toutefois, il a été observé que certains matériaux de cette famille présentent une forte propension à la surfusion c'est-à-dire la capacité d'un matériau à rester à l'état liquide lorsque sa température interne est inférieure à sa température de cristallisation, ce qui constitue un inconvénient très pénalisant, expliquant en partie pourquoi leur mise en oeuvre est toujours au niveau de R et D. La conséquence de cet inconvénient s'observe lors de la phase de décharge du système de stockage, étape au cours de laquelle la cristallisation du MCP est déclenchée pour permettre la restitution de la chaleur stockée par le MCP sous forme latente. Or dans les faits, la forte propension à la surfusion caractéristique des polyols utilisés comme MCP rend cette phase difficilement maitrisable et pose donc une vraie problématique pour leur exploitation.

Dans le cadre du projet de recherche Européen SAM.SSA pour "Sugar Alcohol based Materials for Seasonal Storage Applications", différentes voies pour maitriser la cristallisation de ces types de MCP ont été revues.

Le bullage a été identifié comme une voie prometteuse afin d'amorcer la cristallisation des alcools de sucre. Ce bullage, obtenu par l'injection de gaz (notamment de l'air) directement dans le MCP augmente la quantité de germes solides dans l'ensemble du volume agité. La restitution de la chaleur se fait alors dans des temps raisonnables pour une application industrielle. Mais ces résultats ont également mis en évidence un temps de latence de l'ordre de 30 minutes entre le début du bullage et le début de la cristallisation appelé temps d'induction ainsi qu'une variabilité très forte de cedit temps d'induction. L'amorçage de la cristallisation du MCP par simple agitation, notamment par bullage semble donc possible, mais avec un temps de latence pouvant porter préjudice aux performances du système. De plus, le système est mal maitrisé puisque ce temps de latence présente une part aléatoire importante (allant de quelques minutes à plusieurs heures). Enfin, ce temps de latence relativement long implique une variabilité du niveau de température restituée par le système de stockage thermique. En effet, le niveau de température de la chaleur restituée continue de baisser tant que la cristallisation du MCP n'est pas amorcée. Ainsi il est courant d'observer des niveaux de température descendant en dessous de la température de fusion du MCP pour ensuite remonter et se stabiliser à une température inférieure à la température de fusion du MCP. Une fois l'ensemble du MCP solidifié, la température recommence à diminuer.

On connait du document Delgado et al. "Triggering and accélération of xylitol crystallization by seeding and shearing: Rheo-optical and rheological investigation" l'étude de la nucléation secondaire du Xylitol par une agitation mécanique et un ensemencement. Les mesures réalisées ont pu présenter une accélération de la cristallisation du Xylitol. Toutefois, ces résultats sont difficiles à mettre en oeuvre et d'autant plus à un niveau industriel.

Tout l'enjeu pour envisager le développement et l'exploitation future de ces stockages exploitant des MCP sujets à la surfusion, notamment des alcools de sucres, repose donc sur la possibilité d'améliorer le contrôle de cristallisation.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation on prévoit un Système de Stockage Thermique (SST) par Matériau à Changement de Phase (MCP) comprenant :
- une cuve destinée à contenir un MCP (2),
- un système de circulation plongeant dans la cuve, destiné à la circulation d'un fluide caloporteur issu d'un réseau externe de circulation du fluide caloporteur,
- un dispositif de contrôle de la cristallisation du MCP,
caractérisé en ce que le dispositif de contrôle de la cristallisation du MCP comprend un dispositif de bullage configuré pour former des bulles de gaz, en partie inférieure de la cuve, dans le MCP, et un dispositif d'ensemencement configuré pour former des germes solides de MCP dans la cuve de MCP.

Le dispositif de bullage est un dispositif d'agitation par bullage qui sert à arracher des germes au MCP solide et à les transporter dans l'ensemble du volume de MCP qui est avantageusement au moins partiellement liquide au cours d'une phase de décharge. On parle de nucléation secondaire. Le bullage présente l'avantage de ne pas encombrer le volume intérieur de la cuve et donc faciliter l'agencement du MCP, du système de circulation du fluide caloporteur et du dispositif de cristallisation.

L'invention permet de réduire, voire supprimer le caractère aléatoire du temps d'induction permettant donc améliorer la vitesse de décharge du SST. Cela permet d'assurer une restitution de la chaleur du SST à température presque constante et à des niveaux de température les plus élevés possible (proches de la température de fusion). Les performances du SST en termes de puissance en décharge et de niveaux de températures restituées sont améliorées par la présente invention. L'invention propose ainsi une solution d'amorçage de la cristallisation la plus efficace possible.

Lors du démarrage du bullage, la nucléation secondaire est directement activée sans avoir à attendre l'apparition de premiers germes de façon non maitrisée et donc aléatoire. Le bullage permet d'arracher des particules de MCP aux germes solides de MCP, préexistants notamment du fait du dispositif d'ensemencement, et de les transporter dans l'ensemble du volume agité, créant ainsi le grand nombre de germes cristallins nécessaires à la décharge du SST avec des performances acceptables.

Il est important de noter la synergie entre les deux dispositifs (bullage et ensemencement). En effet, l'ensemencement seul ne permettrait de créer que peu de sites de croissance et la décharge du système de stockage serait excessivement lente. À l'inverse, il a été montré que les dispositifs actuels n'utilisant qu'un système d'agitation sont soumis à des temps de latence variables et relativement longs et notamment supérieurs à 30 minutes.

Un autre aspect concerne un procédé de stockage d'énergie thermique par un SST tel que décrit ci-dessus caractérisé en ce qu'il comprend :
- une phase de charge au cours de laquelle un fluide caloporteur cède sa chaleur à un MCP contenu dans une cuve 1 entrainant la fusion du MCP,
- une phase de décharge au cours de laquelle le MCP cède sa chaleur au fluide caloporteur entrainant la cristallisation du MCP et comprenant la formation de bulle de gaz en partie inférieure de la cuve par le dispositif de bullage et la formation de germes de MCP solide dans la cuve, par le dispositif d'ensemencement.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un système de stockage thermique selon un premier mode de réalisation, le dispositif d'ensemencement comprenant un réservoir externe et un ensemencement par gravité dans la cuve.
La figure 2 représente un système de stockage thermique selon un deuxième mode de réalisation, le dispositif d'ensemencement comprenant un réservoir externe et un ensemencement par gravité dans le dispositif de bullage pour assurer un ensemencement par le gaz de bullage.
La figure 3 représente un système de stockage thermique selon un troisième mode de réalisation, le dispositif d'ensemencement comprenant un réservoir externe et un ensemencement par un gaz distinct du gaz de bullage et traversant un bloc de MCP solide.
La figure 4 représente un système de stockage thermique selon un quatrième mode de réalisation, le dispositif d'ensemencement comprenant un réservoir externe et un ensemencement par le gaz de bullage traversant un bloc de MCP solide.
La figure 5 représente un système de stockage thermique selon un cinquième mode de réalisation correspondant à la figure 1 comprenant en plus un dispositif de prélèvement.

Les dessins sont donnés à titre d'exemple et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, le dispositif d'ensemencement 10 comprend un réservoir 14 comprenant du MCP solide.

Selon un exemple, le réservoir 14 de MCP solide est agencé à l'intérieur de la cuve 1, le MCP solide étant au moins partiellement en contact avec le MCP 2 de la cuve 1. Le MCP solide est par exemple sous forme de bloc de MCP solide compacté. Le réservoir de MCP solide est un piège de MCP solide agencé dans la cuve.

Selon un exemple, le réservoir 14 de MCP solide est agencé à l'extérieur de la cuve 1.

Selon un exemple, le dispositif d'ensemencement 10 comprend un introducteur 12, 15, 19 de MCP solide sous forme de poudre dans la cuve 1. L'introducteur 12 est par exemple agencé entre le réservoir 14 et la cuve 1, préférentiellement par l'intermédiaire d'un distributeur entre le réservoir 14 et l'introducteur 12.

Selon un exemple, l'introducteur de MCP solide sous forme de poudre est agencé pour introduire le MCP solide sous forme de poudre par gravité dans la cuve.

Selon un exemple, l'introducteur de MCP solide sous forme de poudre est agencé pour introduire le MCP solide sous forme de poudre dans un circuit de gaz. L'introduction de MCP solide sous forme de poudre se fait donc par un convoyage aérodynamique.

Selon un exemple, le dispositif de bullage 11 comprend un circuit de gaz dans lequel l'introducteur de MCP solide sous forme de poudre est agencé pour introduire le MCP solide sous forme de poudre. Cette disposition facilite le dispositif d'ensemencement en utilisant le dispositif de bullage et notamment son gaz pour l'injection du MCP solide sous forme de poudre.

Selon un exemple, le dispositif d'ensemencement 10 comprend un circuit de gaz distinct du dispositif de bullage 11.

Selon un exemple, l'introducteur de gaz comprenant une circulation de gaz dans le réservoir de MCP solide.

Selon un exemple, le MCP solide du réservoir est compact.

Selon un exemple, le SST comprend un dispositif de prélèvement de MCP dans la cuve destiné à être utilisé par le dispositif d'ensemencement 10.

Selon un exemple, les germes de MCP solides représentent de l'ordre de 1‰ en poids du poids de MCP dans la cuve.

Selon un exemple, le SST comprend un MCP sujet à la surfusion, avantageusement combinant à la fois de faibles taux de nucléation et de faibles taux de croissance cristalline.

Selon un exemple, le MCP présente une surfusion correspondant à la différence entre sa température de cristallisation théorique et sa température réelle de cristallisation égale ou supérieure à 2°C.

Selon un exemple, le MCP présente une faible croissance cristalline, préférentiellement un taux de croissance inférieure à 0,1 mm/s.

Pour la suite de la description, on entend par « haut » et « bas », ou leurs dérivés, une qualité de positionnement relatif d'un élément du SST lorsque celui-ci est installé de façon fonctionnelle, le « haut » étant orienté à l'opposé du sol et le « bas » étant orienté vers le sol. L'extrémité supérieure se situe en haut et l'extrémité inférieure se situe en bas.

On entend par un paramètre « sensiblement égal/supérieur/inférieur à » une valeur donnée, que ce paramètre est égal/supérieur/inférieur à la valeur donnée, à plus ou moins 10% près, voire à plus ou moins 5% près, de cette valeur

L'invention concerne un Système de Stockage thermique (SST). Le stockage de l'énergie thermique permet à la chaleur d'être utilisée en différé. La chaleur peut être stockée sous plusieurs formes. L'invention s'attache au stockage sous la forme de chaleur latente avec l'utilisation de matériaux à changement de phase qui emmagasinent l'énergie à mesure qu'ils changent de phase. Lorsque le matériau atteint sa température de changement de phase, il absorbe une quantité de chaleur pour réaliser la transformation, connue sous le nom de chaleur latente de fusion ou de vaporisation selon le cas. À l'inverse, lorsque le matériau liquide ou gaz est refroidi, il retourne à la phase solide ou liquide en restituant sa chaleur latente.

Bien que la chaleur latente de fusion soit plus faible que la chaleur latente d'évaporation, la transition solide-liquide est la plus prometteuse puisqu'elle permet de limiter l'expansion volumique et ainsi l'augmentation de pression due au changement de phase.

Le SST selon l'invention utilise préférentiellement un MCP 2, ou un mélange de MCP, diphasique, solide/liquide.

Le SST selon l'invention comprend une cuve 1 contenant un MCP 2 et un système de circulation d'un fluide caloporteur 5 plongeant dans la cuve 1. Le système de circulation d'un fluide caloporteur 5 forme un échangeur thermique interne à la cuve 1. L'échangeur thermique interne comprend préférentiellement un faisceau 5 de tubes à ailettes assemblé entre un collecteur et un distributeur hydraulique 6-7. La cuve 1 est également dénommée calandre, préférentiellement cylindrique pour des raisons de tenue mécanique. En fonctionnement, le fluide caloporteur circule à l'intérieur des tubes et échange sa chaleur avec un MCP 2 contenu dans la cuve 1.

Avantageusement, la cuve 1 s'étend suivant une direction principale verticale. Avantageusement, l'échangeur thermique interne s'étend suivant une direction verticale, le faisceau 5 de tubes s'étend verticalement entre le collecteur et le distributeur 6-7 préférentiellement disposés aux extrémités supérieure et inférieure de la cuve 1. La cuve est une enceinte, c'est-à-dire qu'elle est close à l'exception des ouvertures décrites.

Le SST fonctionne suivant trois phases majeures : la charge, le stockage et la décharge.
- Une phase dite de charge, durant laquelle le fluide caloporteur cède sa chaleur au MCP 2, entrainant la fusion de celui-ci. La température du fluide est alors supérieure à la température de fusion du MCP 2 et son sens de circulation est vertical descendant.
- Une phase, dite de stockage, au cours de laquelle la circulation du fluide caloporteur est arrêtée et le MCP 2 conserve l'énergie thermique stockée, hors considération des déperditions thermiques avec l'extérieur.
- Une phase dite de décharge durant laquelle le fluide caloporteur circule à une température inférieure à la température de solidification du MCP 2, entrainant la cristallisation du matériau et le réchauffement du fluide caloporteur. Le fluide circule dans le sens vertical ascendant.

Dans ce système, le stockage est dit chargé quand tout le MCP est liquide. Il est déchargé quand tout le MCP est solide.

L'invention s'applique à tous les MCP sujets au phénomène de surfusion. La surfusion est la capacité du MCP à descendre sous le point de fusion thermodynamique point de cristallisation tout en restant sous forme liquide. Pour l'invention, un MCP est considéré comme sujet à la surfusion à partir d'un degré de surfusion de 2°C, préférentiellement 5°C, ce qui peut alors empêcher la décharge du SST.

Pour l'invention, la surfusion est calculée comme correspondant à la différence entre la température de fusion à l'équilibre thermodynamique et la température réelle de cristallisation. La température réelle de cristallisation étant inférieure à température théorique de solidification. Des degrés de surfusion beaucoup plus élevés peuvent également être résolus par l'invention, par exemple, le Xylitol peut descendre sans difficulté en surfusion jusqu'à la température ambiante. Compte tenu de sa température de cristallisation considérée entre 93°C et 95°C, le degré de surfusion du Xylitol peut être dans ce cas d'environ 70°C.

Préférentiellement, l'invention s'applique à tous les MCP sujets au phénomène à la fois de faibles taux de nucléation et de faibles taux de croissance cristalline. A titre préféré, la faible croissance cristalline s'entend d'un taux de croissance inférieure à 0,1 mm/s.

Préférentiellement, le MCP 2 est choisi parmi les composés organiques et notamment les alcools de sucres appartenant à la famille des polyols, préférentiellement le sorbitol, le xylitol, le, arabitol, adonitol ou éventuellement l'érythritol ou le mannitol ainsi que leurs mélanges ou les produits dérivés d'alcools de sucres comme l'isosorbide et les produits dérivés de l'isosorbide ou leurs mélanges. Des mélanges des composés organiques peuvent être utilisés. Les MCP ci-dessus listés sont extraits des plantes et peuvent être qualifiés de biosourcés.

Les alcools de sucres possèdent des valeurs d'enthalpie de fusion élevées. On relève ainsi une enthalpie de fusion de, de 280 J/g pour le xylitol. Ils présentent aussi une grande masse volumique de l'ordre de 1500 kg/m³ (par exemple à l'état solide), ce qui conduit à une densité énergétique très élevée. Ce sont par ailleurs des produits peu coûteux et non toxiques.

De manière caractéristique de l'invention, le SST comprend un dispositif de contrôle de la cristallisation du MCP. Le dispositif de contrôle de la cristallisation est également dénommé dispositif de rupture de surfusion. Ce dispositif permet de déclencher la solidification du MCP liquide, également appelé surfondu, dans la cuve 1. Ce dispositif assure l'amorçage de la cristallisation.

Selon un aspect de l'invention, le dispositif de contrôle de la cristallisation comprend un dispositif de bullage 11 et un dispositif d'ensemencement 10.

Le dispositif de bullage est destiné à former des bulles 8 de gaz dans le MCP 2, contenu dans la cuve 1. Préférentiellement, le dispositif de bullage configuré pour assurer la formation des bulles 8 de gaz dans la partie inférieure de la cuve 1. Ainsi, les bulles 8 de gaz assurent une agitation du MCP 2 surfondu dans la cuve 1 depuis la partie inférieure jusqu'à la partie supérieure, lors de leur remontée. Les bulles de gaz montent dans le stockage par différence de densité, permettant de mélanger l'ensemble du volume de MCP 2.

Le dispositif d'ensemencement 10 est configuré pour former des germes solides de MCP dans la cuve 1 de MCP 2. Le dispositif d'ensemencement 10 assure l'ajout de MCP solide dans la cuve 1. Préférentiellement, le dispositif d'ensemencement 10 est en fonction lors de la décharge du SST c'est-à-dire lorsque le MCP est liquide. La présence de germe de MCP solide dans le MCP liquide en surfusion est possible, car le dispositif d'ensemencement 10 est configuré pour assurer l'ajout du MCP solide dans une zone de la cuve 1 dans laquelle le MCP présente avantageusement une température inférieure à la température de fusion du MCP.

L'injection de MCP solide dans la cuve 1 de MCP 2 est réalisée avantageusement en partie inférieure de la cuve 1, mais plus cette injection est placée vers le bas, plus le dispositif de contrôle de la cristallisation sera efficace.

La synergie des deux dispositifs présents dans le dispositif de contrôle de la cristallisation permet d'amorcer et maitriser la nucléation secondaire dans un MCP surfondu présentant des problèmes de surfusion couplant avantageusement faible taux de nucléation primaire et faible taux de croissance cristalline pour du stockage par chaleur latente.

En effet, le dispositif d'ensemencement assure la présence de premiers germes dans la cuve de MCP surfondu et le dispositif de bullage permet de créer une multitude de germes cristallins à partir des germes préexistants introduits par le dispositif d'ensemencement. L'agitation induite par le bullage permet aussi d'assurer une bonne répartition des nouveaux germes créés dans le volume de MCP.

Selon un mode de réalisation, le dispositif de bullage 11 comprend un circuit de gaz comprenant avantageusement un injecteur 15a de gaz dans la cuve 1 directement dans le MCP 2 et préférentiellement en partie inférieure de la cuve 1.

Préférentiellement, le gaz injecté n'a pas de fonction de fluide caloporteur. Le gaz injecté est un fluide distinct du fluide caloporteur circulant dans le faisceau 5 de tubes du système de circulation du fluide caloporteur.

Le gaz est choisi parmi de l'azote ou de l'argon ou l'hélium ou éventuellement de l'air. L'azote présente l'avantage d'être un gaz inerte limitant l'oxydation du MCP tout en ayant un coût plus faible que l'argon. Le gaz est tel qu'il reste à l'état gazeux dans les conditions de pression et de température d'utilisation du SST selon l'invention. Le gaz est donc un gaz monophasique dans les conditions de l'invention. L'argon et l'azote satisfont cette condition en présentant des valeurs de températures de liquéfaction très inférieure à 0°C. À titre d'exemple, l'argon ou l'azote qui présentent une température d'ébullition très inférieure à 0°C à la pression atmosphérique (-185,8°C pour l'argon et -195,79°C pour l'azote)

Lors de l'injection de gaz dans le MCP 2, des bulles 8 se forment et créent tout d'abord une agitation du volume de MCP surfondu permettant par nucléation secondaire de produire en large quantité des germes cristallins à partir des germes introduits par le dispositif d'ensemencement 10 puis de les répartir dans la cuve 1. La vitesse de restitution de la chaleur est augmentée. Or, la vitesse de restitution de la chaleur est déterminante pour la puissance du système de stockage. Si la restitution de chaleur est lente, elle limitera la puissance échangée avec le fluide caloporteur. Ainsi, grâce à l'invention, les performances du SST sont améliorées. Le phénomène de surfusion est alors réduit.

Suivant un mode de réalisation, la cuve 1 du SST comprend un ciel gazeux 9, préférentiellement la pression basse du ciel gazeux 9, c'est-à-dire lorsque le MCP est à l'état solide est de 1 bar de sorte à ne pas endommager les équipements.

Le ciel gazeux 9 comprend avantageusement au moins le gaz injecté par le dispositif de bullage 11. Préférentiellement, le ciel gazeux 9 comprend au moins un gaz inerte tel que notamment de l'azote ou de l'argon, ce dernier étant toutefois plus coûteux, pour éviter les problèmes de compatibilité avec l'air ambiant de certains MCP tels que les alcools de sucre, qui réagissent avec l'oxygène et s'oxydent.

Avantageusement, la cuve 1 comprend un ciel gazeux 9 disposé au-dessus du MCP 2. Le ciel gazeux 9 se situe entre la surface supérieure du MCP 2 et le plafond de la cuve 1. Le collecteur supérieur 7 et le collecteur inférieur 6 formant respectivement au moins partiellement le plafond de la cuve 1 et le fond de la cuve 1.

Le SST comprend une évacuation 18 disposée sur la cuve 1 préférentiellement en partie supérieure configurée pour évacuer le gaz du dispositif de bullage 11. L'évacuation 18 comprend préférentiellement au moins une valve d'évacuation ou un clapet d'évacuation pouvant être taré.

Suivant un mode de réalisation préféré, le gaz circule dans le SST en circuit fermé. C'est-à-dire que le gaz injecté en partie inférieure de la cuve remonte vers la partie supérieure de la cuve 1 où il est évacué pour être réutilisé. À cet effet, avantageusement l'évacuation 18 est reliée au dispositif de bullage 11 directement ou indirectement par un réservoir 17 de gaz.

Suivant un autre mode de réalisation, le gaz injecté par le dispositif de bullage11 ressort par l'évacuation 18 et n'est pas réutilisé. La circulation du gaz se fait en circuit ouvert. Ce mode de réalisation est plus particulièrement mis en oeuvre lorsque le gaz de bullage est de l'air.

Selon un mode de réalisation préféré, le dispositif de bullage 11 est agencé en partie inférieure de la cuve 1. La partie inférieure et la partie supérieure de la cuve 1 sont définies par les parties de la cuve 1 respectivement situées au-dessous et au-dessus d'un plan médian horizontal séparant en deux parties la cuve1, préférentiellement dans le tiers inférieur de la cuve 1 plus préférentiellement, le dispositif de bullage 11 est disposé à l'extrémité inférieure de la cuve 1, c'est-à-dire à proximité immédiate du fond de la cuve 1 où se situe notamment le collecteur inférieur 6 de l'échangeur thermique interne.

Préférentiellement, l'évacuation 18 est agencée en partie supérieure de la cuve 1 plus préférentiellement dans le tiers supérieur de la cuve 1 plus préférentiellement, l'évacuation 18 est disposée à l'extrémité supérieure de la cuve 1, c'est-à-dire à proximité immédiate du plafond de la cuve 1 où se situe notamment le collecteur supérieur 7 de l'échangeur thermique interne.

Ces dispositions particulières permettent de prévoir un parcours le plus long possible pour le gaz cheminant dans le MCP 2 contenu dans la cuve 1.

Le SST comprend avantageusement un réservoir 17 de gaz destiné à alimenter le dispositif de bullage 11. Le réservoir est relié à la cuve 1 par au moins un circuit de gaz comprenant une canalisation 15 et avantageusement un injecteur terminal 15a. La canalisation 15 comprend avantageusement une vanne de régulation 16 destinée à contrôler l'alimentation en gaz. Le gaz est placé à l'état gazeux sous pression, préférentiellement de l'ordre de 5 bars, dans le réservoir 17. Le gaz comprimé présente un volume moindre facilitant son stockage. Le gaz est ensuite injecté à l'état gazeux, préférentiellement sous pression de l'ordre de 2 bars, dans la cuve 1 par le dispositif de bullage 11. Le gaz est évacué de la cuve 1 à l'état gazeux par l'évacuation 18. La canalisation 15 comprend préférentiellement un détendeur 27 configuré pour détendre le gaz comprimé issu du réservoir 17 pour son injection dans la cuve 1.

Selon l'invention, le dispositif de bullage 11 comprend au moins un injecteur terminal 15a destiné à injecter le gaz dans la cuve 1 au contact du MCP 2.

Suivant les modes de réalisations, le dispositif de bullage 11 peut comprendre de 1 à 300 injecteurs terminaux 15a.

Selon un mode de réalisation, le dispositif d'ensemencement 10 comprend un réservoir 14 comprenant du MCP solide destiné à former des germes de MCP dans le MCP 2 liquide de la cuve 1. Selon ce mode de réalisation, le réservoir 14 est rechargé en MCP solide après un certain nombre de cycles de charge/décharge du SST en fonction de la taille du réservoir 14 et de la quantité de MCP solide utilisée à chaque cycle.

Selon une première possibilité non représentée, le réservoir comprenant le MCP solide est agencé dans la cuve 1. Le réservoir est un réservoir interne. Le réservoir forme un piège à MCP solide directement agencé dans la cuve 1. Le MCP solide présent dans le réservoir permet de générer des germes de MCP solide dans le MCP liquide lors de la phase de décharge et ainsi participer à initier la cristallisation.

Le réservoir est configuré pour protéger une partie de MCP solide et l'empêcher de fondre lors de la phase de charge.

Préférentiellement, le réservoir 14 comprend du MCP solide sous forme compacte 20, préférentiellement sous forme d'un bloc de MCP solide 20.

Selon un mode de réalisation, du MCP solide est expulsé du réservoir et relâché dans le volume de MCP surfondu agité.

Selon un autre mode de réalisation, le réservoir de MCP solide est agencé dans la cuve préférentiellement en partie inférieure et plus préférentiellement à proximité du dispositif de bullage 11. Le réservoir est par exemple sous forme de treillis laissant une partie du MCP solide en contact des bulles formées par le dispositif de bullage 11.

Selon un mode de réalisation, le réservoir est un piège froid comprenant par exemple un circuit de refroidissement visant à abaisser très localement la température du MCP ou utilisant le refroidissement induit par la circulation de gaz utilisé par le dispositif bullage de sorte à maintenir le MCP du piège à l'état solide. Le circuit de refroidissement maintient la température du MCP solide à une température inférieure à sa température de fusion.

Selon un mode de réalisation, le réservoir est un piège en pression comme utilisé notamment dans les chaufferettes de montagne.

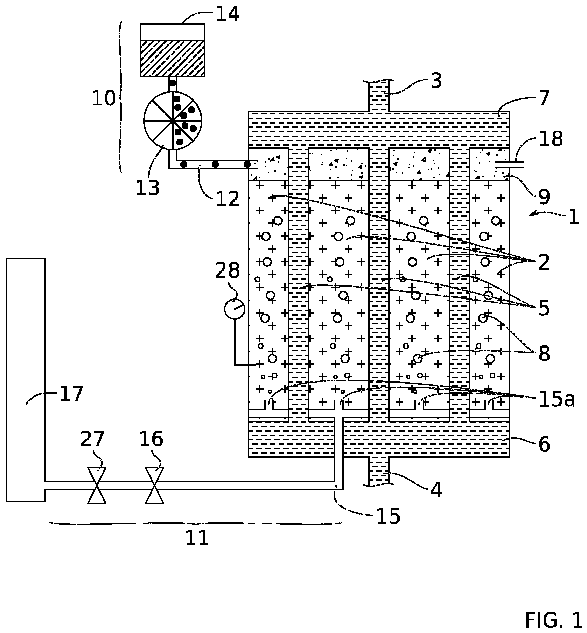

Selon une deuxième possibilité illustrée aux figures 1 à 5, le réservoir 14 est agencé à l'extérieur de la cuve 1. Le réservoir 14 est un réservoir externe 14.

Le réservoir 14 peut comprendre du MCP solide sous forme de poudre avantageusement prête à être injectée dans la cuve 1 ou du MCP solide à l'état compacté. Dans ce dernier cas, le système comprend avantageusement un moyen de transformer le MCP solide à l'état compacté en MCP solide sous forme de poudre tel que par exemple une rappe ou un broyeur. Le MCP solide à l'état compacté est ainsi réduit sous forme de poudre avant son injection dans la cuve 1. Le moyen pour transformer le MCP solide compacté 20 en MCP solide sous forme de poudre peut alternativement comprendre un circuit de gaz. Le gaz du circuit de gaz circulant au contact du MCP solide compacté emporte de la poudre de MCP. Préférentiellement dans ce cas, le MCP solide compacté est poreux pour permettre la circulation de gaz au sein du MCP solide compacté 20.

Selon un aspect, le dispositif d'ensemencement 10 comprend un introducteur 12 de MCP solide sous forme de poudre.

Selon un premier mode de réalisation, l'introducteur 12 de MCP solide sous forme de poudre, également dénommée poudre de MCP, est configuré pour assurer l'injection du MCP solide sous forme de poudre directement dans la cuve 1. À cet effet, l'introducteur 12 de MCP solide sous forme de poudre du dispositif d'ensemencement 10 comprend avantageusement un distributeur 13 de poudre par gravité. L'introducteur 12 de MCP solide sous forme de poudre est configuré pour assurer l'injection par gravité. Préférentiellement, le réservoir 14 de MCP solide est agencé au-dessus de l'introducteur 12, plus précisément du distributeur 13 agencé au-dessus de l'introducteur 12. Le MCP solide sous forme de poudre tombe du réservoir 14, avantageusement dans le distributeur 13 puis, dans l'introducteur 12, puis dans la cuve 1 par gravité. À titre d'exemple, le distributeur 13 est une écluse rotative ou une vis d'Archimède. Le distributeur 13 a pour fonction de contrôler la quantité de poudre de MCP ajoutée dans la cuve 1.

Préférentiellement, selon ce premier mode de réalisation, le dispositif d'ensemencement 10 est configuré pour introduire le MCP sous forme de poudre en partie supérieure de la cuve 1 et plus préférentiellement dans le ciel de gaz 9.

Selon un deuxième mode de réalisation, l'introducteur 12 de MCP solide sous forme de poudre est configuré pour assurer l'introduction du MCP solide sous forme de poudre dans un circuit de gaz débouchant dans la cuve 1.

Le circuit de gaz appartient selon une première possibilité au dispositif d'ensemencement 10. Le dispositif d'ensemencement 10 comprend un circuit de gaz comprenant une canalisation de gaz 19 configurée pour transporter le MCP solide sous forme de poudre pour son injection dans la cuve 1. La canalisation 19 débouche dans la cuve 1, préférentiellement dans le MCP 2, préférentiellement en partie inférieure. Le circuit de gaz est configuré pour assurer la circulation d'un gaz porteur tel que par exemple de l'azote. Une quantité de 0,5 à 50, préférentiellement 1 à 20 litres d'azote par minute est par exemple satisfaisant pour permettre l'injection de MCP solide sous forme de poudre dans la cuve 1.

Selon une deuxième possibilité, le circuit de gaz appartient au dispositif de bullage 11. À cet effet, l'introducteur de MCP solide sous forme de poudre 12 débouche dans le dispositif de bullage 11, plus précisément dans le circuit de gaz et préférentiellement au plus proche de l'entrée de gaz dans la cuve 1. Le gaz transportant le MCP solide sous forme de poudre dans la cuve 1 est le gaz du dispositif de bullage 11.

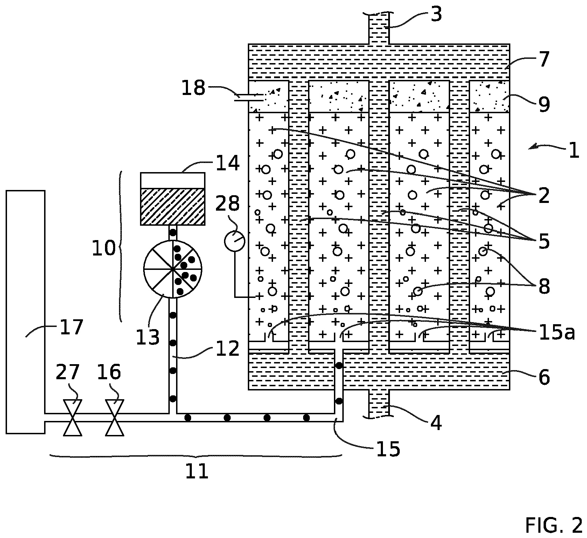

Selon ce deuxième mode de réalisation, l'introducteur 12 de MCP solide sous forme de poudre du dispositif d'ensemencement 10 comprend selon un mode de réalisation un distributeur 13 de poudre par gravité dans le circuit de gaz comme illustré à la figure 2 et décrit ci-dessus. Le distributeur 13 alimente l'introducteur 12 qui alimente le circuit de gaz.

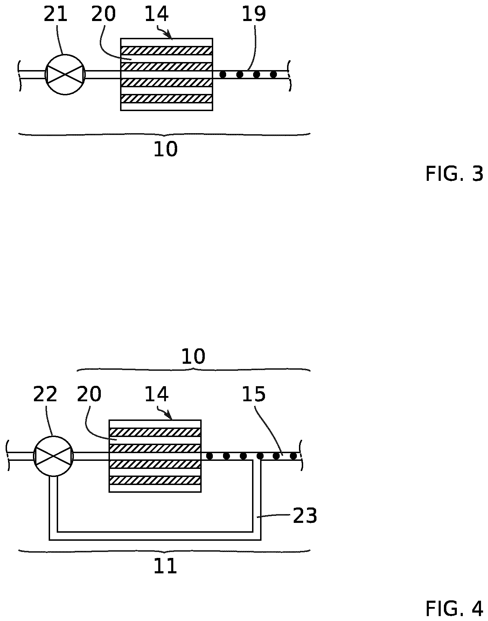

Selon ce deuxième mode de réalisation, le circuit de gaz assure la circulation du gaz dans le réservoir 14 comprenant le MCP solide à l'état compacté comme illustré aux figures 3 et 4.

Le gaz du circuit de gaz circule à travers un bloc de MCP poreux 20 et va alors arracher quelques poussières et se charger en MCP solide. Le gaz est injecté dans la cuve 1 par l'injecteur 15a. Ces poussières servent ensuite de semence pour amorcer la nucléation secondaire. Ce système est passif contrairement à la distribution de poudre.

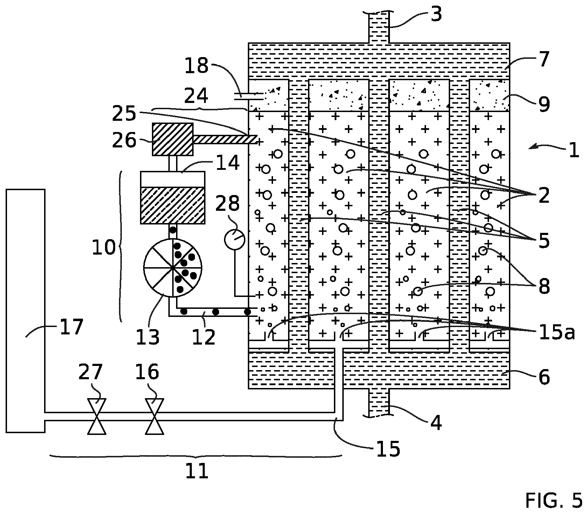

Selon un mode de réalisation, le système selon l'invention comprend un dispositif de prélèvement 24 de MCP dans la cuve 1. Le dispositif de prélèvement 24 est destiné à éviter de devoir recharger le réservoir de MCP solide agencé en dehors de la cuve et alimentant le dispositif d'ensemencement 10. Selon une possibilité, le dispositif de prélèvement 24 est configuré pour prélever le MCP à l'état solide à la fin d'une phase de décharge en prévision de la prochaine phase de décharge. À titre d'exemple, le dispositif de prélèvement 24 est un racloir ou un carottage 25 dans la masse de MCP solide comme illustré à la figure 5. Le MCP solide prélevé est réduit en poudre par exemple broyé par un broyeur 26. Selon une autre possibilité, le dispositif de prélèvement 24 est configuré pour prélever le MCP à l'état liquide puis pour le cristalliser. Selon un exemple, le dispositif de prélèvement 24 est une évacuation de MCP liquide depuis la cuve 1.

Selon l'invention, la quantité de MCP solide sous forme de poudre utilisée à chaque décharge est faible par rapport au MCP contenu dans la cuve 1. À titre d'exemple, de 0,1 à 10 g de MCP solide sous forme de poudre est utilisée pour une décharge d'un SST dont la cuve 1 comprenant l'ordre de 500 kg de MCP.

Préférentiellement, le MCP solide sous forme de poudre présente une taille de poudre /de grains configurée pour permettre de faciliter son transport et son injection que ça soit par gravité ou par un circuit de gaz. La taille de grain doit au moins être très petite devant les diamètres des circuits d'injection, à titre d'exemple au moins 10 fois plus petit. Poudre : entre 1 et 100 microns canaux bullage : 1 mm.

Selon un mode de réalisation préféré de l'invention, le dispositif de contrôle de la cristallisation comprend au moins un capteur de température préférentiellement agencé à proximité de l'injection de MCP solide sous forme de poudre dans la cuve 1 de sorte à suivre l'évolution de la température du MCP 2 contenu dans la cuve 1 en vue de contrôler l'injection de MCP solide sous forme de poudre. Avantageusement, l'injection de MCP solide sous forme de poudre est effectuée quand la température du MCP 2 contenu dans la cuve 1 à proximité de l'injection de MCP solide sous forme de poudre est inférieure à la température de fusion du MCP. Il est toutefois possible de prévoir une injection du MCP solide sous forme de poudre même si cette condition n'est pas respectée. L'injection de MCP solide sous forme de poudre peut être continue pendant toute la phase de décharge.

En décharge, un SST est classiquement soumis à un gradient de température : le fond de la cuve 1 est refroidi plus vite que le haut de la cuve 1. Plus les germes sont introduits en fond de cuve 1, plus le temps d'induction pourra être réduit. Ainsi il est possible d'amorcer la cristallisation en fond de cuve 1 sans pour autant que le haut de la cuve ne soit passé en dessous de la température de fusion. Avantageusement, le dispositif de contrôle de la cristallisation est configuré pour suivre la température du MCP de la cuve 1 situé proche du lieu d'injection du MCP solide sous forme de poudre. Une bonne optimisation de l'ensemencement et du bullage, préférentiellement dans les zones les plus vite refroidies de la cuve, permet de réduire voire supprimer la surfusion à l'échelle du SST et d'assurer des niveaux de température restituée élevés, constants lors du changement de phase et proches de la température de fusion du MCP

Selon un aspect, l'invention concerne un procédé de stockage d'énergie thermique. À cet effet, le procédé comprend une phase de charge d'énergie thermique au sein d'un système de stockage thermique SST tel que décrit ci-dessus.

La phase de charge dans laquelle le SST charge l'énergie thermique apportée par le fluide caloporteur précède généralement la phase de décharge illustrée aux figures 1 à 5. Dans cette phase de charge, le fluide caloporteur circule préférentiellement de haut en bas dans le système de circulation du fluide caloporteur. Le fluide caloporteur pénètre à une première température dans le collecteur supérieur 7 par une tubulure de circulation de fluide caloporteur 3 qui distribue le fluide au faisceau de tubes 5 plongeant dans le MCP 2 de la cuve 1. En cheminant dans le faisceau de tubes 5 en contact avec le MCP 2, le fluide caloporteur cède de la chaleur au MCP. Le fluide caloporteur ressort du faisceau de tubes 4 par le collecteur inférieur 6 puis est évacué de la cuve 1 par une tubulure de circulation de fluide caloporteur 4. Le fluide ressort à une deuxième température plus faible que la première température. Le MCP 2 qui récupère l'énergie thermique du fluide caloporteur va augmenter en température jusqu'à changer d'état. Classiquement, le MCP 2 passe de l'état solide à l'état liquide lors de la phase de charge.

Pendant cette phase de charge, le changement d'état du MCP ne nécessite pas de contrôle de la cristallisation. Avantageusement, le dispositif de bullage 11 peut être activé en permanence pour favoriser les transferts thermiques entre le MCP 2 et les tubes 5, ce qui améliore les performances du système de stockage à la fois en charge et en décharge. Cela est possible du fait de la nature poreuse du MCP à l'état solide qui permet au gaz du dispositif de bullage de le traverser. Selon une possibilité alternative, le dispositif de bullage 11 et le dispositif d'ensemencement 10 sont inactivés.

Au cours de la phase de décharge, le SST décharge l'énergie thermique stockée au profit du fluide caloporteur. Dans cette phase, le fluide caloporteur circule de bas en haut dans le système de circulation du fluide caloporteur. Le fluide caloporteur pénètre à une première température dans le collecteur inférieur 6 par une tubulure de circulation de fluide caloporteur 4 qui distribue le fluide au faisceau de tubes 5 plongeant dans le MCP 2 de la cuve 1. En cheminant dans le faisceau de tubes 5 en contact avec le MCP 2, le MCP cède de la chaleur au fluide caloporteur. Le fluide caloporteur ressort du faisceau de tubes 5 par le collecteur supérieur 7 puis est évacué de la cuve 1 par une tubulure de circulation de fluide caloporteur 3. Le fluide ressort à une deuxième température plus élevée que la première température. Le MCP 2 qui cède l'énergie thermique au fluide caloporteur va diminuer en température jusqu'à changer d'état. Classiquement, le MCP 2 passe de l'état liquide à l'état solide lors de la phase de décharge.

Pendant cette phase de décharge, le changement d'état du MCP 2 se fait par cristallisation et nécessite typiquement un contrôle pour éviter les risques de surfusion notamment. Le dispositif de bullage 11 et le dispositif d'ensemencement 10 sont en fonctionnement. Du gaz est donc injecté dans la cuve 1 par les injecteurs 15a avantageusement directement au contact du MCP 2. Le gaz injecté génère de bulles 8 dans le MCP 2 propices à la propagation de la cristallisation du MCP dans le reste de la cuve. Au cours de la décharge, le dispositif d'ensemencement 10 introduit des germes de MCP solide dans le MCP 2 contenu dans la cuve 1. Les bulles 8 permettent d'assurer l'agitation du volume de MCP 2 surfondu et permettent ainsi de créer une multitude de sites de croissance cristalline par nucléation secondaire à partir des germes introduits par le dispositif d'ensemencement 10 et de répartir ces nouveaux germes dans tout le volume de la cuve 1. Le fait de créer un grand nombre de germes permet notamment d'assurer une très grande surface totale de croissance cristalline, contrebalançant le faible taux de croissance du MCP. La restitution de la chaleur se fait alors dans des temps raisonnables, c'est à dire préférentiellement inférieur ou égal à 30 minutes, pour une application industrielle. Lors du démarrage du bullage, la nucléation secondaire peut être directement activée sans avoir à attendre l'apparition de premiers germes de façon non maitrisée et donc aléatoire.

En figure 1, le SST comprend un dispositif de contrôle de la cristallisation assurant l'amorçage de la solidification du MCP liquide par un dispositif de bullage 11 et un dispositif d'ensemencement 10 comprenant un réservoir 14 externe comprenant de la poudre de MCP. Quelques grammes, voir milligrammes, de MCP suffisent à amorcer la solidification. Ce réservoir 14 peut donc contenir quelques kilogrammes pour assurer environ un million de décharges. La poudre de MCP tombe par simple gravité dans un distributeur 13 de type écluse qui sert à contrôler la quantité de poudre à injecter. La poudre peut ensuite être injectée n'importe où dans la cuve 1 par un l'introducteur 12, préférentiellement en partie inférieure de la cuve 1. Selon une possibilité, un capteur de température 28 tel qu'un thermocouple est agencé dans la cuve 1 plongeant dans le MCP 2 à proximité de l'introducteur 12 c'est-à-dire à proximité du site d'injection de poudre pour suivre la température du MCP liquide.

En figure 2, le principe du distributeur 13 de poudre de MCP est le même qu'en figure 1, mais le distributeur 13 alimente par l'introducteur 12 le dispositif de bullage 11, plus précisément le circuit de gaz et plus précisément une canalisation 15 alimentant la cuve 1 en gaz destiné à former des bulles 8 de gaz dans le MCP 2. Cette canalisation 15 de gaz est normalement uniquement destinée au dispositif de bullage 11 est ici utilisée comme un convoyeur aéromécanique pour injecter la poudre de MCP dans le volume de MCP 2 liquide contenu dans la cuve 1. La quantité de poudre injectée est pilotable par le distributeur 13 et le débit de gaz (environ 1L/min) est à optimiser selon la taille de la cuve 1 pour assurer un bon transport et un bon brassage. Un contrôle de température peut être ajouté en sortie d'injecteur 15a.

En figures 3 et 4, un circuit de gaz est utilisé pour arracher des poussières de MCP du MCP solide compacte. Le MCP est un bloc de MCP solide poreux 20 avantageusement agencé dans un réservoir 14. Ce bloc de MCP 20, pouvant être appelé « stack », est ajouté dans le circuit de gaz comprenant une canalisation 15, 19 de gaz. Le réservoir 14 est agencé sur une canalisation 15, 19 de gaz assurant la circulation de gaz dans ledit réservoir 14 au contact du bloc de MCP solide 20. Le gaz chargé en poudre est ensuite injecté dans la cuve 1 de MCP 2 surfondu par la canalisation 15, 19 de gaz débouchant dans la cuve 1 avantageusement par un injecteur 15a, ou 19.

La figure 3 représente une alternative de la figure 1 ou 5, c'est-à-dire que le dispositif d'ensemencement 10 de la figure 1 ou 5 est remplacé par le dispositif d'ensemencement 10 de la figure 3. En figure 3, le réservoir 14 comprenant le bloc de MCP solide 20 est inséré dans une canalisation de gaz 19 indépendante du dispositif de bullage 11. Le dispositif de bullage 11 est dans ce cas-là comme illustré aux figures 1 et 5. La canalisation de gaz 19 est destinée à injecter du gaz comprenant la poudre de MCP solide dans la cuve 1. La canalisation 19 débouche dans la cuve 1 dans le MCP 2. Selon une possibilité, la canalisation 19 comprend une vanne 21 de régulation du flux de gaz circulant dans la canalisation 19. Préférentiellement, la vanne 21 est agencée en amont du réservoir 14 comprenant le bloc de MPC solide 20 de sorte à contrôler la production et l'injection de poudre de MCP dans la cuve 1. Cela permet d'allonger la durée de vie du bloc de MCP 20.

La figure 4 représente une alternative de la figure 2, c'est-à-dire que le dispositif d'ensemencement 10 et de bullage11 illustrés à la figure 2 sont remplacés par le dispositif d'ensemencement 10 et le dispositif de bullage de la figure 4. En figure 4, le réservoir 14 comprenant le bloc de MCP solide 20 est inséré dans le dispositif de bullage 11 plus précisément dans la canalisation 15. Une vanne trois voies 22 et une dérivation 23 sont agencées pour contourner le réservoir 14 dans le cas où le bullage dans le MCP est nécessaire sans charger le gaz en poudre de MCP. En effet ce bloc 20 s'use puisque des poussières de MCP sont continuellement arrachées et le contourner permet alors d'allonger sa durée de vie. L'ajout de MCP solide se fait par voie passive tant que le gaz circule dans le bloc 20.

En figure 5, le système de stockage thermique comprend un dispositif de prélèvement de MCP contenu dans la cuve 1 pour ensuite l'utiliser comme semence, c'est à dire comme poudre de MCP pour l'ensemencement. Dans cette figure 5, le MCP est prélevé sous forme solide. Une fois la décharge terminée, une partie de MCP est prélevée, par exemple de l'ordre de quelques grammes par un système actif. Cette petite quantité de MCP est ensuite broyée puis stockée en attendant la prochaine décharge du stockage. Le système de stockage SST est ensuite utilisé en charge sur un nouveau cycle. Lorsque l'on souhaite réaliser une nouvelle décharge, la réserve de MCP broyé est alors injectée dans la cuve 1 de MCP surfondu, ici directement par un distributeur 13 type écluse rotative comme en figure 1. À noter que la façon d'injecter le MCP solide sous forme de poudre dans la cuve 1 peut très bien reprendre la figure 2 à savoir par une canalisation 19 de gaz de type convoyeur aéromécanique. Grâce au dispositif de prélèvement, le système est ainsi autonome.

L'invention n'est pas limitée aux modes de réalisations précédemment décrits et s'étend à tous les modes de réalisation couverts par les revendications.

### LISTE DE REFERENCES

- 1.: Cuve
- 2.: MCP
- 3.: Tubulure de circulation d'entrée ou de sortie du fluide caloporteur
- 4.: Tubulure de circulation d'entrée ou de sortie du fluide caloporteur
- 5.: Faisceau de tubes plongeant dans le MCP
- 6.: Collecteur inférieur
- 7.: Collecteur supérieur
- 8.: Bulles
- 9.: Ciel de gaz
- 10.: Dispositif d'ensemencement
- 11.: Dispositif de bullage
- 12.: introducteur de poudre
- 13.: Distributeur
- 14.: Réservoir de MCP
- 15.: Canalisation
- 15a.: Injecteur de gaz
- 16.: Vanne de régulation
- 17.: Réservoir
- 18.: Evacuation
- 19.: Canalisation
- 20.: Bloc de MCP solide poreux
- 21.: Vanne de régulation du convoyeur aéromécanique
- 22.: Vanne trois voies
- 23.: Dérivation
- 24.: Dispositif de prélèvement de MCP
- 25.: Carottage de MCP solide
- 26.: Broyeur de MCP solide
- 27.: Détendeur
- 28.: Capteur de température

## Revendications

1. Système de Stockage Thermique (SST) par Matériau à Changement de Phase (MCP) (2) comprenant :
- une cuve (1) destinée à contenir un MCP (2),
- un système de circulation plongeant dans la cuve (1), destiné à la circulation d'un fluide caloporteur issu d'un réseau externe de circulation du fluide caloporteur,
- un dispositif de contrôle de la cristallisation du MCP(2) comprenant un dispositif de bullage (11) configuré pour former des bulles (8) de gaz, en partie inférieure de la cuve (1), dans le MCP (2), le système de stockage thermique étant **caractérisé en ce que** le dispositif de contrôle de la cristallisation comprend, par ailleurs, un dispositif d'ensemencement (10) configuré pour former des germes solides de MCP dans la cuve (1) de MCP (2).

2. SST selon la revendication précédente dans lequel le dispositif d'ensemencement (10) comprend un réservoir (14) comprenant du MCP solide.

3. SST selon la revendication précédente dans lequel le réservoir (14) de MCP solide est agencé à l'intérieur de la cuve (1), le MCP solide étant au moins partiellement en contact avec le MCP (2) de la cuve (1)

4. SST selon la revendication 2 dans lequel le réservoir (14) de MCP solide est agencé à l'extérieur de la cuve (1).

5. SST selon la revendication précédente dans lequel le dispositif d'ensemencement (10) comprend un introducteur (12,19,15) de MCP solide sous forme de poudre dans la cuve (1).

6. SST selon la revendication précédente dans lequel l'introducteur (12) de MCP solide sous forme de poudre est agencé pour introduire le MCP solide sous forme de poudre par gravité dans la cuve.

7. SST selon la revendication 5 dans lequel l'introducteur (12) de MCP solide sous forme de poudre est agencé pour introduire le MCP solide sous forme de poudre dans un circuit de gaz.

8. SST selon la revendication précédente dans lequel le dispositif de bullage (11) comprend un circuit de gaz dans lequel l'introducteur (12) de MCP solide sous forme de poudre est agencé pour introduire le MCP solide sous forme de poudre.

9. SST selon la revendication 7 dans lequel le dispositif d'ensemencement (10) comprend un circuit de gaz distinct du dispositif de bullage (11).

10. SST selon l'une quelconque des revendications 7 à 9 dans lequel le circuit de gaz comprenant une circulation de gaz dans le réservoir (14) de MCP solide.

11. SST selon la revendication 10 dans lequel le MCP solide du réservoir (14) est compact.

12. SST selon l'une quelconque des revendications 4 à 11 comprenant un dispositif de prélèvement (24) de MCP dans la cuve destiné à être utilisé par le dispositif d'ensemencement (10).

13. SST selon l'une quelconque des revendications précédentes dans lequel les germes de MCP solides représentent de l'ordre de 1%o en poids du poids de MCP dans la cuve.

14. SST selon l'une quelconque des revendications précédentes comprenant un MCP sujet à la surfusion, préférentiellement le MCP présente une surfusion correspondant à la différence entre sa température de cristallisation théorique et sa température réelle de cristallisation égale ou supérieure à 2°C.

15. Procédé de stockage d'énergie thermique par un SST selon l'une quelconque des revendications 1 à 14 **caractérisé en ce qu'**il comprend :
- une phase de charge au cours de laquelle un fluide caloporteur cède sa chaleur à un MCP (2) contenu dans une cuve (1) entrainant la fusion du MCP (2),
- une phase de décharge au cours de laquelle le MCP (2) cède sa chaleur au fluide caloporteur entrainant la cristallisation du MCP et comprenant la formation de bulle de gaz en partie inférieure de la cuve (1) par le dispositif de bullage (11) et la formation de germe de MCP solide dans la cuve (1) par le dispositif d'ensemencement (10).

## Patentansprüche

1. Thermisches Speichersystem (TSS) anhand von Phasenwechselmaterial (PCM) (2), umfassend:
- einen Tank (1), der dazu bestimmt ist, ein PCM (2) zu enthalten,
- ein Zirkulationssystem, das in den Tank (1) eintaucht, zur Zirkulation einer Wärmeträgerflüssigkeit bestimmt, die aus einem externen Zirkulationsnetz der Wärmeträgerflüssigkeit stammt,
- eine Vorrichtung zur Steuerung der Kristallisation des PCM (2), umfassend eine Blasenbildungsvorrichtung (11), die konfiguriert ist, um im unteren Teil des Tanks (1) Gasblasen (8) in dem PCM (2) zu bilden, wobei das thermische Speichersystem **dadurch gekennzeichnet ist, dass** die Vorrichtung zur Steuerung der Kristallisation weiter eine Impfvorrichtung (10) umfasst, die konfiguriert ist, um feste PCM-Keime in dem Tank (1) für PCM (2) zu bilden.

2. TSS nach dem vorstehenden Anspruch, wobei die Impfvorrichtung (10) einen Behälter (14) umfasst, der festes PCM umfasst.

3. TSS nach dem vorstehenden Anspruch, wobei der Behälter (14) für festes PCM im Inneren des Tanks (1) angeordnet ist, wobei das feste PCM mindestens teilweise in Kontakt mit dem PCM (2) des Tanks (1) ist.

4. TSS nach Anspruch 2, wobei der Behälter (14) für festes PCM außerhalb des Tanks (1) angeordnet ist.

5. TSS nach dem vorstehenden Anspruch, wobei die Impfvorrichtung (10) einen Einbringer (12, 19, 15) von festem PCM in Form von Pulver in den Tank (1) umfasst.

6. TSS nach dem vorstehenden Anspruch, wobei der Einbringer (12) von festem PCM in Form von Pulver angeordnet ist, um das feste PCM in Form von Pulver durch Schwerkraft in den Tank einzubringen.

7. TSS nach Anspruch 5, wobei der Einbringer (12) von festem PCM in Form von Pulver angeordnet ist, um das feste PCM in Form von Pulver in einen Gaskreislauf einzubringen.

8. TSS nach dem vorstehenden Anspruch, wobei die Blasenbildungsvorrichtung (11) einen Gaskreislauf umfasst, in dem der Einbringer (12) von festem PCM in Form von Pulver angeordnet ist, um festes PCM in Form von Pulver einzubringen.

9. TSS nach Anspruch 7, wobei die Impfvorrichtung (10) einen Gaskreislauf umfasst, der sich von der Blasenbildungsvorrichtung (11) unterscheidet.

10. TSS nach einem der Ansprüche 7 bis 9, wobei der Gaskreislauf eine Gaszirkulation in dem Behälter (14) für festes PCM umfasst.

11. TSS nach Anspruch 10, wobei das feste PCM des Behälters (14) kompakt ist.

12. TSS nach einem der Ansprüche 4 bis 11, umfassend eine Entnahmevorrichtung (24) von PCM in dem Tank, das dazu bestimmt ist, von der Impfvorrichtung (10) verwendet zu werden.

13. TSS nach einem der vorstehenden Ansprüche, wobei die festen PCM-Keime in der Größenordnung von 1 Gew.-‰ des PCM-Gewichts in dem Tank repräsentieren.

14. TSS nach einem der vorstehenden Ansprüche, umfassend ein PCM, das der Unterkühlung ausgesetzt ist, wobei das PCM vorzugsweise eine Unterkühlung aufweist, die dem Unterschied zwischen seiner theoretischen Kristallisationstemperatur und seiner tatsächlichen Kristallisationstemperatur größer oder gleich 2°C entspricht.

15. Verfahren zum Speichern thermischer Energie durch ein TSS nach einem der Ansprüche 1 bis 14, **dadurch gekennzeichnet, dass** es umfasst:
- eine Ladephase, im Laufe derer eine Wärmeträgerflüssigkeit ihre Wärme an ein PCM (2) abgibt, das in einem Tank (1) enthalten ist, was zum Verschmelzen des PCM (2) führt,
- eine Entladephase, im Laufe derer das PCM (2) seine Wärme an die Wärmeträgerflüssigkeit abgibt, was zur Kristallisation des PCM führt, und die Bildung von Gasblasen im unteren Teil des Tanks (1) durch die Blasenbildungsvorrichtung (11) und die Bildung eines festen PCM-Keims in dem Tank (1) durch die Impfvorrichtung (10) umfasst.

## Claims

1. A heat storage system (HSS) by phase change material (PCM) (2) comprising:
- a tank (1) for containing a PCM (2),
- a circulation system dipped in the tank (1), for circulating a heat transfer fluid coming from an outer circulation network of the heat transfer fluid,
- a device for controlling crystallisation of the PCM (2) comprising a bubbling device (11) configured to form gas bubbles (8), in the lower part of the tank (1), in the PCM (2), the heat storage system being **characterised in that** the device for controlling crystallisation additionally comprises a seeding device (10) configured to form solid PCM seeds in the tank (1) of PCM (2).

2. The HSS according to the preceding claim, wherein the seeding device (10) comprises a reservoir (14) comprising solid PCM.

3. The HSS according to the preceding claim, wherein the reservoir (14) of solid PCM is arranged inside the tank (1), the solid PCM being at least partially in contact with the PCM (2) of the tank (1).

4. The HSS according to claim 2, wherein the reservoir (14) of solid PCM is arranged outside the tank (1).

5. The HSS according to the preceding claim, wherein the seeding device (10) comprises an introducer (12, 19, 15) of solid PCM as a powder into the tank (1).

6. The HSS according to the preceding claim, wherein the introducer (12) of solid PCM as a powder is arranged to introduce the solid PCM as a powder by gravity into the tank.

7. The HSS according to claim 5, wherein the introducer (12) of solid PCM as a powder is arranged to introduce the solid PCM as a powder into a gas circuit.

8. The HSS according to the preceding claim, wherein the bubbling device (11) comprises a gas circuit in which the introducer (12) of solid PCM as a powder is arranged to introduce the solid PCM as a powder.

9. The HSS according to claim 7, wherein the seeding device (10) comprises a gas circuit distinct from the bubbling device (11).

10. The HSS according to any of claims 7 to 9, wherein the gas circuit comprises a gas circulation in the reservoir (14) of solid PCM.

11. The HSS according to claim 10, wherein the solid PCM of the reservoir (14) is compact.

12. The HSS according to any of claims 4 to 11, comprising a device for collecting (24) PCM from the tank for being used by the seeding device (10).

13. The HSS according to any of the preceding claims, wherein the solid PCM seeds account for approximately 1%o by weight of the PCM weight in the tank.

14. The HSS according to any of the preceding claims, comprising a PCM prone to supercooling, preferably the PCM exhibits supercooling corresponding to the difference between its theoretical crystallisation temperature and its actual crystallisation temperature greater than or equal to 2°C.

15. A method for storing heat energy by an HSS according to any of claims 1 to 14, **characterised in that** it comprises:
- a loading phase during which a heat transfer fluid gives its heat to a PCM (2) contained in a tank (1) causing the PCM (2) to melt,
- an unloading phase during which the PCM (2) causing the PCM to crystallise and comprising forming gas bubbles in the lower part of the tank (1) by the bubbling device (11) and forming solid PCM seeds in the tank (1) by the seeding device (10).
